# EUROPÄISCHE PATENTANMELDUNG

(11) **EP 1 296 034 A2**
(43) Veröffentlichungstag der Anmeldung: **26.03.2003**
(21) Anmeldenummer: 02016722.7
(22) Anmeldetag: 26.07.2002
(51) Int. Cl.: F01P 7/08, F01P 1/06, F02M 25/07

(54) **Verfahren zur Steuerung und/oder Regelung eines Lüfters für eine Brennkraftmaschine**

(30) Priorität: 13.09.2001 DE 10145037
(71) Anmelder: ROBERT BOSCH GMBH, 70442 Stuttgart (DE)
(72) Erfinder: Heinstein, Axel, 71299 Wimsheim (DE); Ries-Mueller, Klaus, 74906 Bad Rappenau (DE)

(57) **Zusammenfassung**

Die Erfindung betrifft ein Verfahren zur Steuerung und/oder Regelung (10,11,12,13) eines Lüfters (34) für eine Brennkraftmaschine eines Kraftfahrzeugs, wobei die Brennkraftmaschine eine Abgasrückführung (23,24) aufweist, die Abgas in ein Saugrohr (20) zurückführt. Die Erfindung betrifft weiterhin ein Steuergerät (25) für eine Brennkraftmaschine, sowie eine Steuerung und/oder Regelung eines Lüfters (34) für eine Brennkraftmaschine eines Kraftfahrzeugs, wobei die Brennkraftmaschine einer Abgasrückführung (23,24) aufweist, mittels der Abgas in ein Saugrohr (20) zurückführbar ist.

## Beschreibung

Die Erfindung betrifft ein Verfahren zur Steuerung und/oder Regelung eines Lüfters für eine Brennkraftmaschine eines Kraftfahrzeugs, wobei die Brennkraftmaschine eine Abgasrückführung aufweist, die Abgas in ein Saugrohr zurückführt. Die Erfindung betrifft weiterhin ein Steuergerät für eine Brennkraftmaschine, sowie eine Steuerung und/oder Regelung eines Lüfters für eine Brennkraftmaschine eines Kraftfahrzeugs, wobei die Brennkraftmaschine einer Abgasrückführung aufweist, mittels der Abgas in ein Saugrohr zurückführbar ist.

### Stand der Technik

Moderne Motormanagementsysteme für Brennkraftmaschinen von Kraftfahrzeugen besitzen standardmäßig ein Abgasrückführungssystem (AGR). Durch eine Rückführung von Abgas werden die NOx-Emission reduziert und durch die mit der Abgasrückführung verbundene Entdrosselung der Kraftstoffverbrauch gesenkt. Das Abgas wird hierbei dem Abgassystem entnommen und mittels einer Rückführleitung dem Saugrohr zugeführt. Die Beeinflussung der Menge des rückgeführten Abgases wird mit einem Abgasrückführventil vorgenommen, das in die Rückführleitung integriert ist. Insbesondere bei hohen Abgasrückführraten, wenn also der Anteil des Abgases an der Luft im Brennraum im Vergleich zur angesaugten Frischluft besonders hoch ist, wird das Saugrohr durch die Rückführung der heißen Abgase stark erwärmt. Je nach Material des Saugrohres (hier kann es sich beispielsweise um Kunststoff handeln) muß die Abgasrückführrate zeitweise reduziert werden, um eine Beschädigung des Saugrohrs zu verhindern. Hierdurch verringern sich jedoch die Vorteile der Abgasrückführung und es kommt zu einem erhöhten Kraftstoffverbrauch und zu erhöhten NOx-Emissionen. Um auch bei hohen Temperaturen des Saugrohrs eine weiterhin hohe Abgasrückführrate zu erzielen ist es alternativ möglich als Material für das Saugrohr einen temperaturbeständiges Material, beispielsweise Aluminium, zu verwenden. Die Verwendung eines solchen temperaturbeständigen Materials führt jedoch bei der Herstellung des Saugrohrs zu erhöhten Kosten.

Aus modernen Kraftfahrzeugen ist es weiterhin bekannt, einen Lüfter eines Kühlsystems stufenlos in Abhängigkeit von der benötigen Kühlleistung zu steuern. Dies kann beispielsweise über eine Steuerung der Drehzahl des Lüfters erfolgen. In der Regel dient dabei die Motorkühlwassertemperatur als Eingangsgröße für die Drehzahlregelung des Lüfters.

### Aufgabe, Lösung und Vorteile der Erfindung

Es ist die Aufgabe der vorliegenden Erfindung, eine kostengünstige und wirksame Möglichkeit zu finden, um auch bei hohen Abgasrückführraten ein Saugrohr einer Brennkraftmaschine vor einer thermischen Überlastung zu schützen.

Diese Aufgabe wird gelöst durch ein Verfahren zur Steuerung und/oder Regelung eines Lüfters für eine Brennkraftmaschine eines Kraftfahrzeugs, wobei die Brennkraftmaschine eine Abgasrückführung aufweist, die Abgas in ein Saugrohr zurückführt, wobei die Steuerung und/oder Regelung des Lüfters wenigstens unter Berücksichtigung einer eine Abgasrückführrate repräsentierenden Größe erfolgt. Entsprechend der bevorzugten Weiterbildung ist der Lüfter ein Lüfter eines Kühlsystems des Kraftfahrzeugs. Hierbei wird erfindungsgemäß der Effekt ausgenutzt, dass bei modernen Brennkraftmaschinen der Lüfter des Kühlsystems in der Regel in der Nähe des Saugrohres angeordnet ist und somit ein Betrieb des Lüfters nicht nur dem eigentlichen Zweck dient (der Kühlung des Motorkühlwassers), sondern auch zu einer Kühlung des Saugrohres führt. Wird erfindungsgemäß die Steuerung und/oder Regelung des Lüfters wenigstens unter Berücksichtigung der Abgasrückführrate durchgeführt, so kann vorzugsweise bei Überschreitung eines vorgebbaren Schwellenwertes der Abgasrückführrate der Lüfter aktiviert und/oder die Leistung des Lüfters erhöht werden. Hierdurch ergibt sich der große Vorteil, dass das Saugrohr auch bei hohen Abgasrückführraten vor einer thermischen Überlastung bzw. einer thermischen Beschädigung geschützt ist. Hierdurch wird es in besonders vorteilhafter Weise möglich, kostengünstige Materialen, z. B. Kunststoff, zur Herstellung des Saugrohres zu verwenden. Die Verwendung dieser kostengünstigen Materialien kann ohne Einbußen beim Kraftstoffverbrauch und bei den NOx-Emissionen erfolgen. Mit anderen Worten: Die Abgasrückführrate kann mit Blick auf optimale Kraftstoffverbrauchs- und Abgaswerte eingestellt werden, ohne dass eine Gefahr für das Saugrohr besteht.

Eine alternative Weiterbildung sieht vor, dass ein zusätzlicher Lüfter zur Kühlung des Saugrohrs angeordnet ist.

Eine bevorzugte Weiterbildung des erfindungsgemäßen Verfahrens sieht vor, dass die Steuerung und/oder Regelung des Lüfters wenigstens unter Berücksichtigung einer die Temperatur der Brennkraftmaschine charakterisierenden Größe und/oder einer Temperatur des Saugrohrs erfolgt. Durch diese erfindungsgemäße Maßnahme wird in besonders vorteilhafter Weise die Ansteuerung des Lüfters bedarfsgerecht vorgenommen. Mit anderen Worten: Es kann im Einzelfall selbst bei einer hohen Abgasrückführrate zunächst auf eine Ansteuerung des Lüfters verzichtet werden, wenn beispielsweise die Temperatur der Brennkraftmaschine oder die Temperatur des Saugrohrs unterhalb kritischer Schwellenwerte liegen. Zur Bestimmung der Temperatur des Saugrohres hat sich die Berechnung mittels eines Temperaturmodels als bevorzugte Weiterbildung herausgebildet. Für die Bestimmung des Temperaturmodels können verschiedene Einflußparameter wie beispielsweise die Abgasrückführrate oder die Umgebungstemperatur bzw. die Temperatur der angesaugten Luft herangezogen werden. Alternativ zur Bestimmung der Temperatur des Saugrohrs mittels eines Temperaturmodels können entsprechend parametrierte Kennfelder in einem Speicher eines Motorsteuergeräts abgelegt oder ein Temperatursensor am Saugrohr angebracht sein.

Die bevorzugte erfindungsgemäße Kombination der vorstehend genannten Merkmale sieht vor, dass bei Überschreitung eines vorgebbares Schwellenwertes der Abgasrückführrate, eines vorgebbaren Schwellenwertes der Brennkraftmaschinentemperatur und eines vorgebbaren Schwellenwertes der Saugrohrtemperatur der Lüfter aktiviert und/oder die Leistung des Lüfters erhöht wird. Durch diese erfindungsgemäßen Verfahrensmerkmale wird in besonders zuverlässiger Weise eine thermische Überlastung des Saugrohrs verhindert.

Ein weiterer großer Vorteil des erfindungsgemäßen Verfahrens liegt darin, dass zur Realisierung kein oder nur wenig zusätzlicher Hardwareaufwand erforderlich ist, da der verwendete Lüfter des Kühlsystems ohnehin im Kraftfahrzeug vorhanden ist. Somit stellt die Erfindung eine besonders kostengünstige Lösung der Aufgabe dar.

Die Aufgabe wird weiterhin gelöst durch ein Steuergerät für eine Brennkraftmaschine mit wenigstens einem Speicher, wobei in dem Speicher Programmdaten abgelegt sind, die eine Ausführung des vorstehend beschriebenen Verfahrens bewirken.

Die Aufgabe wird außerdem gelöst durch eine Steuerung und/oder Regelung eines Lüfters für eine Brennkraftmaschine eines Kraftfahrzeugs, wobei die Brennkraftmaschine eine Abgasrückführung aufweist, mittels der Abgas in ein Saugrohr zurückführbar ist, wobei Mittel vorgesehen sind, um bei der Steuerung und/oder Regelung des Lüfters wenigstens eine Abgasrückführrate zu berücksichtigen. Die Vorteile dieser Steuerung und/oder Regelung ergeben sich analog zum vorstehend beschriebenen erfindungsgemäßen Verfahren.

### Beschreibung von Ausführungsbeispielen

- Figur 1: zeigt ein Ausführungsbeispiel eines erfindungsgemäßen Verfahrens und
- Figur 2: Ein Ausführungsbeispiel einer erfindungsgemäßen Vorrichtung.

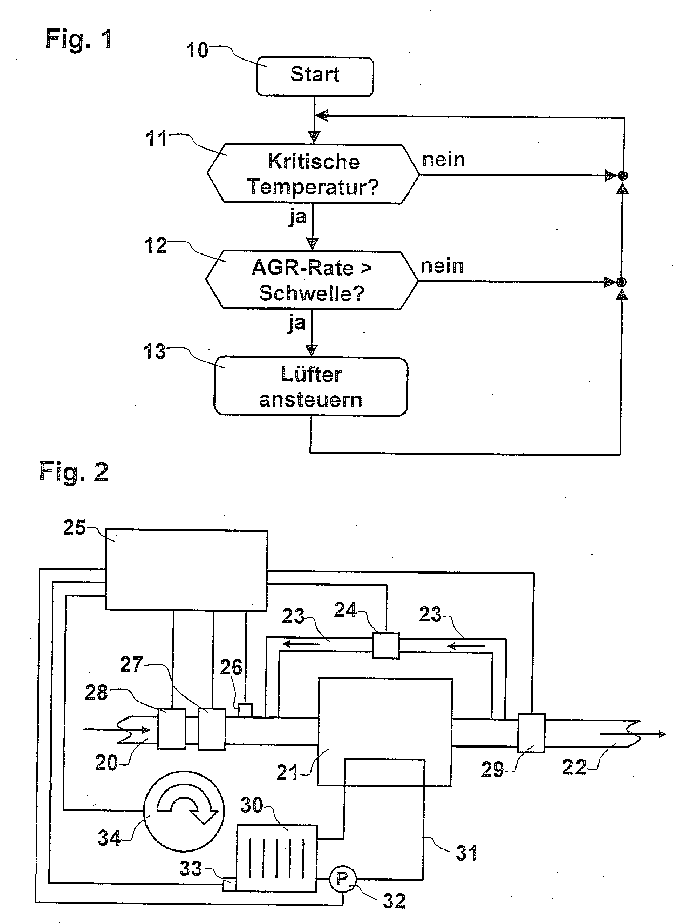

Figur 1 zeigt ein Ausführungsbeispiel des erfindungsgemäßen Verfahrens zur Steuerung und/oder Regelung eines Lüfters für eine Brennkraftmaschine eines Kraftfahrzeugs. Hierbei ist das Verfahren in Figur 1 anhand eines Lüfters eines Kühlsystems des Kraftfahrzeugs gezeigt. Nach dem Start des Verfahrens im Schritt 10 wird im Schritt 11 überprüft, ob kritische Betriebspunkte erreicht sind. Diese Überprüfung auf kritische Betriebspunkte hin kann beispielsweise dadurch erfolgen, dass überprüft wird, ob eine Motortemperatur oberhalb eines Schwellenwertes liegt und ob eine Saugrohrtemperatur oberhalb einer bestimmten Schwelle liegt. Die Motortemperatur kann hierbei beispielsweise durch die Motorkühlwassertemperatur ersetzt werden. Stellt sich in Schritt 11 heraus, dass kein kritischer Betriebspunkt bzw. keine kritische Temperatur erreicht ist wird an den Anfang des Verfahrens zurückgesprungen. Wird hingegen festgestellt, dass eine kritische Temperatur erreicht ist, geht das Verfahren zum Schritt 12 über, indem überprüft wird, ob die Abgasrückführrate oberhalb eines Schwellenwertes liegt. Zur Bestimmung der Abgasrückführrate bieten sich verschiedene Möglichkeiten an, die in diesem Zusammenhang jedoch nicht erfindungswesentlich sind. Beispielsweise kann die Abgasrückführrate durch ein im Steuergerät der Brennkraftmaschine berechnetes Luftmodell bestimmt werden, indem aus zuströmenden und abfließenden Luftmassen und entsprechenden Verbrennungsdaten sowie weiterer Daten von Sensoren, beispielsweise Lambdasensor, Luftmassensensor oder Temperatursensor, die Abgasrückführrate bestimmt wird. Eine weitere Möglichkeit zur Bestimmung der Abgasrückführrate ist das Ablegen von zuvor vermessenen Kennfeldern im Speicher des Steuergeräts. In solchen Kennfeldern kann in Abhängigkeit von bestimmten Eingangsparametern die jeweilige Abgasrückführrate abgelegt sein. Eine weitere und besonders bevorzugte Möglichkeit ist, das erfindungsgemäße Verfahren nicht unmittelbar mittels der Abgasrückführrate durchzuführen, sondern eine Ersatzgröße zu wählen, die die Abgasrückführrate näherungsweise repräsentiert bzw. charakterisiert. Hierzu bietet sich insbesondere die Ventilstellung des Abgasrückführventils an. Auf das Verfahren nach Figur 1 übertragen bedeutet dies, dass in Schritt 12 alternativ zur Abfrage ob eine Abgasrückführrate überschritten worden ist auch überprüft werden kann, ob das Abgasrückführventil einen bestimmten Öffnungswinkel überschritten hat. Stellt sich in Schritt 12 heraus, dass dies nicht der Fall ist, wird an den Anfang des Verfahrens zurückgesprungen. Stellt sich heraus, dass die Schwellenwerte überschritten worden sind, wird vom Schritt 12 zum Schritt 13 übergangen. Im Schritt 13 erfolgt nunmehr die Ansteuerung des Lüfters des Kühlsystems der Brennkraftmaschine. Ansteuerung bedeutet hierbei, dass dann wenn der Lüfter derzeit nicht im Betrieb ist, ein Inbetriebsetzen des Lüfters erfolgt und in den Fällen in den der Lüfter bereits in Betrieb ist, die Drehzahl des Motorlüfters entsprechend erhöht wird. Die Erhöhung der Drehzahl des Motorlüfters wird hierbei mit der Höhe der Abgasrückführrate bzw. der Öffnung des Abgasrückführventils korreliert. Nachdem im Schritt 13 die Ansteuerung des Lüfters erfolgt ist, fährt das Verfahren wiederum mit Schritt 11 fort, um weiterhin zu überprüfen, ob die Bedingung für die Ansteuerung des Lüfters auch weiterhin vorliegen.

Der Effekt, dass durch die Ansteuerung des Lüfters, der eigentlich zur Kühlung des Kühlwassers im Fahrzeugkühler vorgesehen ist, auch das Ansaugrohr gekühlt wird, beruht darauf, dass bei modernen Kraftfahrzeugen der Lüfter in der Regel so angeordnet ist, dass ein Betrieb des Lüfters auch einen nennenswerten Luftstrom in der Nähe des Saugrohrs zur Folge hat, wodurch eine Kühlung des Saugrohrs in einem bestimmten Maße erfolgt.

Alternativ ist aber auch der Einsatz eines zusätzlichen Lüfters möglich. Dieser zusätzliche Lüfter könnte dann direkt das Saugrohr anblasen und hätte somit eine noch größere Kühlwirkung als der Lüfter des Kühlsystems.

Die Messung der kritischen Saugrohrtemperatur nach Schritt 11 des Verfahrens in Figur 1 kann beispielsweise durch einen am Saugrohr angebrachten Temperatursensor erfolgen. Alternativ hierzu ist es möglich, die kritische Saugrohrtemperatur mittels eines Temperaturmodels zu ermitteln. Hierbei könnte abhängig von verschiedenen Einflußparametern wie beispielsweise der Abgasrückführrate oder der Umgebungstemperatur, die Temperatur des Saugrohrs ermittelt werden.

Figur 2 zeigt ein Ausführungsbeispiel eines erfindungsgemäßen Steuerungs- und/oder Regelungssystems sowie ein erfindungsgemäßes Steuergerät. In der Darstellung nach Figur 2 strömt die angesaugte Frischluft in ein Saugrohr 20 ein und gelangt von dort über nicht dargestellte Einlaßventile, in einen Brennraum 21. Da der erfindungswesentliche Punkt das Luftsystem der Brennkraftmaschine ist, ist in der Darstellung nach Figur 2 auf die entsprechende Kraftstoffversorgung verzichtet worden. Hierzu wäre beispielsweise ein Einspritzventil ins Saugrohr 20 oder ein direktes Einspritzventil in den Brennraum 21 von Nöten. Nach der erfolgten Verbrennung im Brennraum 21 gelangt das Abgas über in Figur 2 nicht dargestellte Auslaßventile in das Abgasrohr 22. Die Richtung der Luftströmung ist im Ansaugrohr 20 und im Abgasrohr 22 jeweils durch eine Pfeil angedeutet. Vom Abgasrohr 22 gelangt ein gewisser Teil des Abgases über eine Abgasrückführleitung 23 zurück ins Saugrohr 20. Der Anteil des Abgases der rückgeführt wird, also die Abgasrückführrate, wird mit einem Abgasrückführventil 24 gesteuert. Das Abgasrückführventil 24 wird von einem Steuergerät 25 angesteuert, was durch die entsprechende Verbindungs/Steuerleitung angedeutet ist. Dem Steuergerät 25 wird weiterhin die Saugrohrtemperatur von einem Temperatursensor 26 zugeführt, der am Saugrohr angebracht ist. Das Steuergerät 25 steuert unter anderem eine Drosselklappe 27 und empfängt Daten von einem Luftmassensensor 28. Weiterhin empfängt das Steuergerät Daten von einer Lambdasonde 29, die sich im Abgasrohr 22 befindet.

Figur 2 zeigt weiterhin einen Kühler 30, der von Kühlwasser durchflossen wird. Eine Kühlwasserleitung 31, die den Motorblock und insbesondere den Zylinderkopf um den Brennraum 21 herum durchflutet, ist symbolisch angedeutet. Der Kühlmittelfluß wird durch eine Pumpe 32 beeinflußt, die wiederum vom Steuergerät 25 angesteuert werden kann. Am Kühler angebracht ist weiterhin ein Temperatursensor 33, der die Temperatur des Kühlmittels an das Steuergerät 25 übermittelt. In Abhängigkeit von der Temperatur des Kühlmittels 33 wird standardmäßig ein Lüfter 34 angesteuert, der maßgeblich zur Kühlung des sich im Kühlers 30 befindenden Kühlwassers dient. Weiterhin maßgeblichen Einfluß hat die Kühlung durch den Fahrtwind. Erfindungsgemäß führt der Betrieb des Lüfters 34 auch zu einer Kühlung des Ansaugrohrs 20.

Je nach Höhe der Abgasrückführrate und der Temperaturen von Saugrohr und Kühlwasser wird von dem Steuergerät 25 der Lüfter 34 angesteuert, um auch das Saugrohr 20 zu kühlen. Zur Durchführung dieses Verfahrens ist in dem Steuergerät 25 ein nicht dargestellter Speicher vorgesehen, in dem die entsprechenden Programmdaten abgelegt sind, um das erfindungsgemäße Verfahren durchzuführen.

Die Erfindung ist selbstverständlich nicht auf eine in Figur 2 beispielhaft dargestellte Benzinbrennkraftmaschine beschränkt. In gleicher Weise läßt sich die erfindungsgemäße Vorrichtung sowie das erfindungsgemäße Verfahren beispielsweise bei einer Dieselbrennkraftmaschine anwenden, bei der eine Abgasrückführung ebenfalls zu einer Erwärmung des Saugrohrs führt.

Von besonderer Bedeutung ist die Verwendung des erfindungsgemäßen Verfahrens zur Kühlung der Stelle am Saugrohr, an der das Abgas über die AGR-Leitung in das Saugrohr eingeleitet wird. Dies ist insbesondere dann wichtig, wenn das Saugrohr aus Kunststoff besteht.

## Patentansprüche

1. Verfahren zur Steuerung und/oder Regelung eines Lüfters (34) für eine Brennkraftmaschine eines Kraftfahrzeugs, wobei die Brennkraftmaschine eine Abgasrückführung (23,24) aufweist, die Abgas in ein Saugrohr (20) zurückführt, **dadurch gekennzeichnet, dass** die Steuerung und/oder Regelung (10,11,12,13) des Lüfters (34) wenigstens unter Berücksichtigung einer eine Abgasrückführrate repräsentierenden Größe erfolgt.

2. Verfahren nach Anspruch 1, **dadurch gekennzeichnet, dass** der Lüfter ein Lüfter des Motorkühlsystems ist.

3. Verfahren nach Anspruch 1, **dadurch gekennzeichnet, dass** der Lüfter ein zusätzlicher Lüfter ist, der vornehmlich zur Kühlung des Saugrohrs angeordnet ist.

4. Verfahren nach Anspruch 1, 2 oder 3, **dadurch gekennzeichnet, dass** die Steuerung und/oder Regelung (10,11,12,13) des Lüfters (34) wenigstens unter Berücksichtigung einer die Temperatur der Brennkraftmaschine charakterisierenden Größe (33) und/oder einer Temperatur des Saugrohrs (26) erfolgt.

5. Verfahren nach Anspruch 4, **dadurch gekennzeichnet, dass** die Temperatur des Saugrohrs (26) mittels eines Temperaturmodells bestimmt wird.

6. Verfahren nach Anspruch 1, 2 oder 3 **dadurch gekennzeichnet, dass** bei Überschreitung eines vorgebbaren Schwellenwertes der Abgasrückführrate der Lüfter (34) aktiviert und/oder die Leistung des Lüfters (34) erhöht wird.

7. Verfahren nach Anspruch 1, 2, 3, 4 oder 5 **dadurch gekennzeichnet, dass** bei Überschreitung eines vorgebbaren Schwellenwertes der Abgasrückführrate, eines vorgebbaren Schwellenwertes der Brennkraftmaschinentemperatur und eines vorgebbaren Schwellenwertes der Saugrohrtemperatur der Lüfter (34) aktiviert und/oder die Leistung des Lüfters (34) erhöht wird.

8. Steuergerät (25) für eine Brennkraftmaschine, mit wenigstens einem Speicher, **dadurch gekennzeichnet, dass** in dem Speicher Programmdaten abgelegt sind, die eine Ausführung nach einem der Ansprüche von 1 bis 7 bewirken.

9. Steuerung und/oder Regelung eines Lüfters für eine Brennkraftmaschine eines Kraftfahrzeugs, wobei die Brennkraftmaschine eine Abgasrückführung (23,24) aufweist, mittels der Abgas in ein Saugrohr (20) zurückführbar ist, **dadurch gekennzeichnet, dass** Mittel vorgesehen sind, um bei der Steuerung und/oder Regelung des Lüfters (34) wenigstens eine Abgasrückführrate zu berücksichtigen.

10. Verwendung des Verfahrens nach einem der Ansprüche von 1 bis 7 zur Kühlung eines Saugrohrs an einer Einleitungsstelle, an der Abgas in das Saugrohr zurückgeführt wird.
